# EUROPÄISCHE PATENTSCHRIFT

(11) **EP 1 035 989 B1**
(45) Veröffentlichungstag und Bekanntmachung des Hinweises auf die Patenterteilung: **28.01.2004**
(21) Anmeldenummer: 99923600.3
(22) Anmeldetag: 14.05.1999
(51) Int. Cl.: B60R 16/04

(54) **VORRICHTUNG ZUM AUFNEHMEN UND HALTEN EINER BATTERIE**
DEVICE FOR RECEIVING AND LOCATING A BATTERY
DISPOSITIF POUR LOGER ET MAINTENIR UNE BATTERIE

(30) Priorität: 16.05.1998 DE 19822059
(43) Veröffentlichungstag der Anmeldung: 20.09.2000
(73) Patentinhaber: Mann + Hummel GmbH, 71638 Ludwigsburg (DE)
(72) Erfinder: KLOTZ, Arthur, D-71686 Remseck (DE); KOCH, Ingo, D-71634 Ludwigsburg (DE); LIEB, Klaus, D-71522 Backnang (DE)
(74) Vertreter: Voth, Gerhard, Dipl.-Ing.
(86) Internationale Anmeldenummer: PCT/EP1999/003350
(87) Internationale Veröffentlichungsnummer: WO 1999/059841

(56) Entgegenhaltungen:
- DE-C- 19 628 398
- GB-A- 2 183 081
- US-A- 1 535 906

## Beschreibung

### Stand der Technik

Die Erfindung betrifft eine Vorrichtung zum Aufnehmen und Halten einer Batterie nach der Gattung des Oberbegriffs des Patentanspruchs 1.

Batterien besetzen ein relativ hohes Eigengewicht, und benötigen daher eine sichere Befestigung. Diese ist insbesondere für Starterbatterien im allgemeinen durch Krallen realisiert, die den Fuß der Batterie auf einer Unterlage im Motorraum festklemmen. Eine derartige Befestigung erfordert jedoch ausreichende Platzverhältnisse. Dieser steht jedoch nicht immer zur Verfügung, insbesondere, wenn die Montage der Batterie in einem Batteriekasten vorgesehen ist.

Ein System zur Befestigung von Starterbatterien in einem Batteriekasten ist zum Beispiel aus der EP 508248A1 bekannt. Es sind Federzungen in der Wand des Batteriekastens vorgesehen, die beim Einsetzen der Batterie in den Kasten durch den Batteriefuß nach außen gedrückt werden und sich nach beendeter Montage der Batterie auf dem Batteriefuß abstützten. Nachteilig an dieser Lösung ist jedoch, daß die Haltekraft für die Batterie aus der Batteriekastenwand eingeleitet wird. Daher müssen die Wände des Batteriekastens im Hinblick auf diese Beanspruchung stärker dimensioniert werden. Außerdem ist die Funktion der Federzungen nur ge- währleistet, wenn dieses Bauteil eng toleriert ist.

Eine Vorrichtung gemäß dem Oberbegriff des Anspruchs 1 ist aus der DE-C-19 628 398 bekannt.

Die Aufgabe der Erfindung besteht darin, eine Aufnahme sowie Halterung für eine Batterie zu schaffen, deren Montage auch in beengten Platzverhältnissen möglich ist, die Befestigungskraft für die Batterie jedoch direkt in die Unterlage einleitet und dabei Fertigunstoleranzen aller Bauteile ausgleicht.

Diese Aufgabe wird durch die kennzeichnenden Merkmale des Patentanspruchs 1 gelöst.

### Vorteile der Erfindung

Die erfindungsgemäße Vorrichtung weist die Merkmale der Anspruchs 1 auf.

Es ist vorteilhaft, die Befestigungsmittel zwischen der Batterievwand und der Wandung des Kastens anzuordnen. Der Zugbügel wird bei dieser Bauform durch eine Durchgangsöffnung im Kastenboden geführt und umgreift den Kastenboden von unten.

Eine zweckmäßige Ausbildung der Befestigungsmittel ist darin zu sehen, daß diese bis zum oberen Rand des Kastens geführt werden, wobei die Schraubverbindung in diesem Bereich angeordnet ist. Damit wird die Zugänglichkeit der Schraubver- bindung verbessert. Außerdem kann in der Wandung eine Aufnahme z.B. für die Mutter der Schraubverbindung vorgesehen werden.

Eine Modifikation sieht Ausgleichszonen an den Befestigungsmitteln vor, die Fertigungstoleranzen der Bauteile durch elastische Verformung bei der Montage der Batterie ausgleichen können. Ausgleichszonen können bevorzugt in den Zugbügel sowie in die Druckgabel integriert werden.

Es ist vorteilhaft, den Kastenboden zumindest in Teilbereichen mit einem wellenförmigen Profil zu versehen. Diese Versteifungsmaßnahme führt zu einer weiteren Materialeinsparung am Batteriekasten.

Gemäß einer weiteren Ausgestaltung können im Inneren des Batteriekastens an der Kastenwand Zentrierrippen angebracht sein, die die Montage der Batterie erleichtern. Diese Rippen können durch Faltschamiere derart gestaltet sein, daß der durch sie gegebene Abstand zur Kastenwandung variabel ist. Ein Batteriekasten dieser Bauform ermöglicht somit die Montage unterschiedlicher Batteriegrößen. Dies ist insbesondere beim Einsatz des Batteriekastens in einem Fahrzeugtyp mit unterschiedlichen Motoren sinnvoll. Diese benötigen meist auch Starterbatterien unterschiedlicher Größe.

Es ist vorteilhaft, den Batteriekasten an dessen Boden mit Montagebohrungen zu versehen. Der Batteriekasten kann so mit einer Unterlage verschraubt werden, was eine direkte Kraftleitung zwischen Montagebohrungen im Kastenboden und Krafteinleitstellen der Befestigungsmittel gewährleistet.

Eine besondere Ausführungsform der Erfindung sieht für den Batteriekasten einen Deckel vor, der insbesondere mit einer Kombination aus Steckverbindung und Rastennasen auf den Kasten aufgeklipst werden kann. Dieses Bauteil erfüllt neben den Anforderungen an eine verbesserte Optik auch die Funktion einer Pohlkappen- abdeckung.

Zweckmäßigerweise kann der Batteriekasten sowie der dazugehörige Deckel aus Kunststoff, insbesondere in Spritzgießtechnik hergestellt werden. Die Befestigungsmittel sind aus einem metallischen Werkstoff.

### Zeichnung

Die Erfindung wird nachfolgend in der Zeichnung anhand eines schematischen Ausführungsbeispieles näher erläutert. Hierbei zeigt:
- Figur 1: den Batteriekasten im Schnitt A-A gemäß Figur 4, wobei die Kontur der eingebauten Batterie angedeutet ist,
- Figur 2: den Zugbügel des Befestigungsmittels in der Aufsicht,
- Figur 3: die Druckgabel des Befestigungsmittels in der Aufsicht,
- Figur 4: den Batteriekasten ohne Deckel in der Ansicht von oben und
- Figur 5: den Batteriekasten mit montiertem Deckel in der Seitenansicht.

### Beschreibung der Ausführungsbeispiele

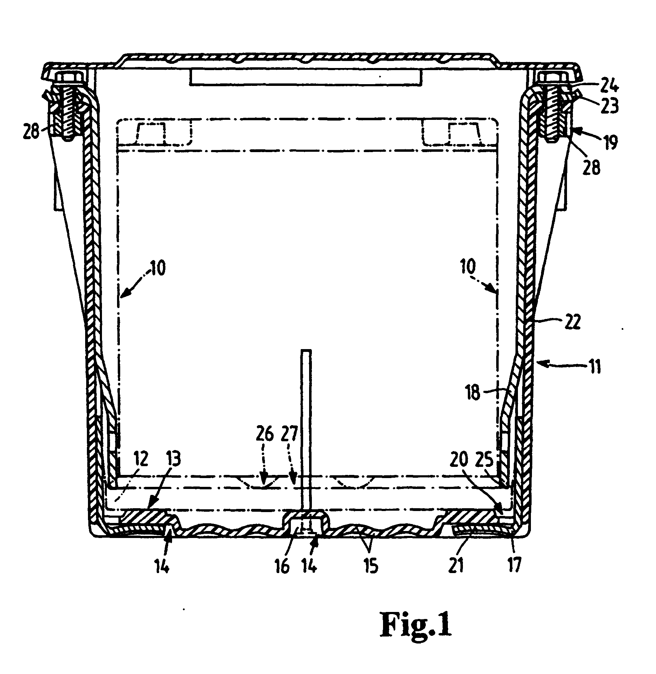

In Figur 1 ist die Vorrichtung zum Aufnehmen und Halten einer Starterbatterie 10 im Querschnitt dargestellt. Die Starterbatterie 10 befindet sich in einem Kasten 11, wobei ein Batteriefuß 12 direkt auf Auflageflächen 13 im Kastenboden 14 aufliegt. Der Kastenboden 14 ist als wellenförmiges Profil 15 ausgeführt, wobei die Auflageflächen 13 durch entsprechende Einbuchtungen 16 im Wellenprofil erzeugt werden.

Das Befestigungsmittel für die Batterie im Kasten besteht aus einem Zugbügel 17 und einer Drudcgabel 18 sowie einer Schraubverbindung 19. Der Zugbügel 17 wird durch eine Durchgangsöffnung 20 im Kastenboden geführt, wobei eine am Zugbügel angebrachte Zuglasche 21 ihrer Angriffsfläche in einer randseitigen Einbuchtung im Kastenboden 14 findet. Der Zugbügel wird zwischen einer Wandung 22 des Batteriekastens und der Batterie zum oberen Rand des Batteriekastens geführt und endet dort in einer, in waagerechter Richtung aus dem Batteriekasten ragenden Befestigungslasche 23.

Oberhalb dieser Lasche ragt eine zweite Befestigungslasche 24 in gleicher Weise aus dem Batteriekasten. Diese gehört zu der Druckgabel 18 welche entlang der Wandung 22 parallel zum Zugbügel 17 verläuft und deren Gabelenden 25 in Aussparungen 26 in einer Oberkante 27 des Batteriefußes zur Anlage kommen.

Die Befestigungslaschen 23, 24 sind mit Bohrungen für die Schraubverbindung 19 versehen. Eine Mutter 28 findet ihre Aufnahme in der Batteriekastenwandung, wo sie an einer Verdrehung während der Montage gehindert wird.

Der Zugbügel 17 wird vor dem Einsetzen der Starterbatterie 10 in den Kasten 11 montiert, die Druckgabel 18 wird nach dem Einsetzen der Batterie montiert.

Durch Festziehen der Schraubverbindung 19 werden Batteriefuß 12 und Kastenboden 14 zwischen Zugbügel 17 und Druckgabel 18 eingeklemmt.

Selbstverständlich müssen die Wandungen 22 des Kastens 11 nicht wie in der dargestellten Bauform bis zur Oberkante der Batterie reichen. Genauso ist eine Halbschaienbauweise denkbar. Weiterhin kann das beschriebene Befestigungsmittel mit anderen Befestigungssystemen kombiniert eingesetzt werden, z.B. wäre ein den Batteriefuß 12 umschließender Absatz in der Wandung 22 denkbar, der die Batterie einseitig fixiert.

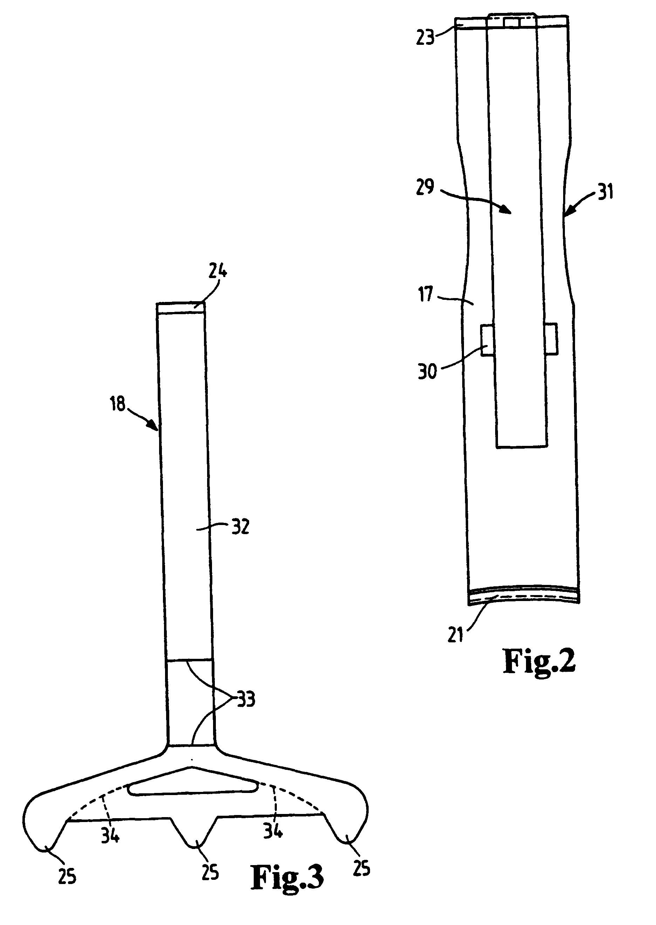

In Figur 2 ist der Zugbügel 17 in der Aufsicht dargestellt. Die Zuglasche 21 hat zu deren Versteifung ein gebogenes Profil, während der restliche Zugbügel eben ausgestaltet ist. Zuglasche 21 und Befestigungslasche 23 sind jeweils entgegengesetzt im Winkel von 90° umgebogen. Der Zugbügel weist eine Ausstanzung 29 auf, die zur Führung der Druckgabel 18 dient. Zusätzlich kann zur verbesserten Führung der Druckgabel ein Bereich 30 in Richtung zum Inneren des Kastens 11 eingedrückt werden. Der Zugbügel weist weiterhin einen Ausgleichsbereich 31 auf der die elastische Verformung des Bauteils erleichtert. Auf diese Weise können Fertigungstoleranzen der Bauteile bei der Montage durch elastische Verformung des Befestigungsmittels ausgeglichen werden.

Figur 3 zeigt die Druckgabel 18 in der Aufsicht. Am oberen Ende der Druckbgabel befindet sich die Befestigungslasche 24, die rechtwinklig von einem Gabelschaft 32 abgewinkelt ist. Der Gabelschaft 32 wird in der Ausstanzung 29 des Zugbügeis 17 geführt. Im unteren Bereich des Gabelschaftes gewährleistet ein Doppelknick 33, daß die Gabelenden 25 in den Bereich des Batteriefußes 12 gelangen können. Die Gabelenden 25 besitzen dieselbe Form wie die Aussparung 26 im Batteriefuß 12. Die dargestellte Druckgabel weist drei Gabelenden auf. Selbstverständlich ist auch eine andere Gabelendenzahl, z. B. die durch die gestrichelte Linie 34 angedeutete Bauform mit zwei Gabelenden, denkbar. Durch den Doppelknick 33 sowie durch die Gestaltung des Bereiches der Gabelenden 25 kann auch die Druckgabel bei der Montage Toleranzen durch elastische Verformung bis zu einem gewissen Grad ausgleichen.

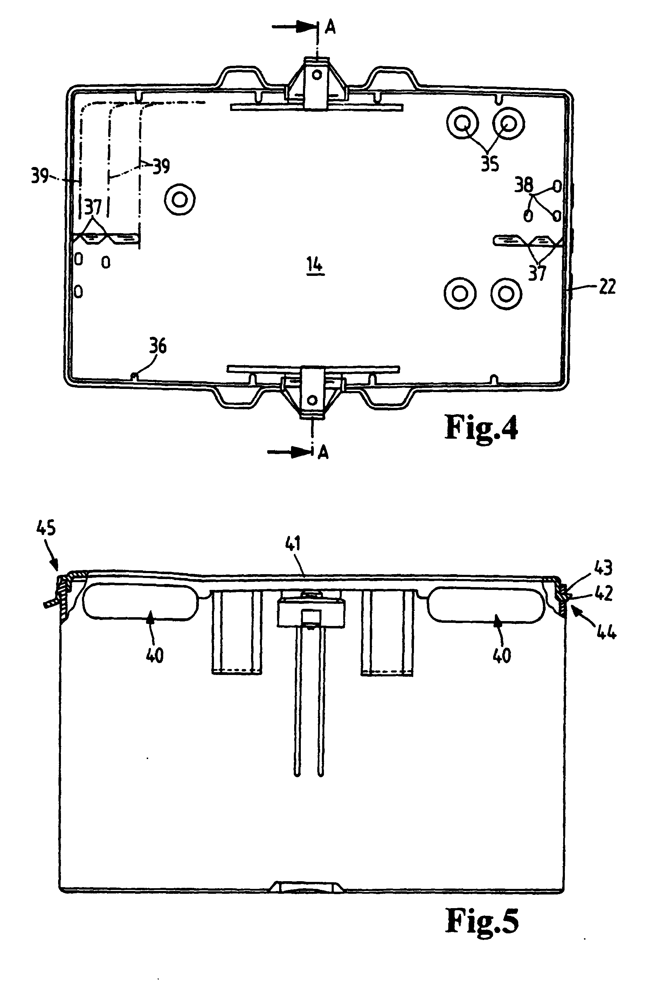

Figur 4 zeigt die Ansicht von oben in den offenen Batteriekasten. Es sind Montagebohrungen 35 zur Befestigung des Batteriekastens im Kastenboden 14 vorgesehen. Im Inneren des Kastens sind an den Wandungen Zentrierrippen 36 vorgesehen, die das Einsetzten der Batterie erleichtern und einen einwandfreien Eingriff der Gabelenden in die dafür vorgesehenen Aussparungen im Batteriefuß gewährleisten. Die Zentrierrippen an der Schmalseite des Batteriekastens sind mit senkrecht ausgerichteten Filmscharnieren 37 ausgestattet. Durch Umknicken dieser Filmscharniere und Einrasten in die dafür vorgesehenen Vertiefungen 38 im Kastenboden 14 können unterschiedliche Abstände zur Wandung 22 erreicht werden. Hierdurch wird der Einbau von Batterien unterschiedlicher Größe möglich, wie durch die Batteriekonturen 39 angedeutet.

Figur 5 ist eine Darstellung des Batteriekastens in der Seitenansicht. Zu erkennen sind Durchgänge 40, durch die die Batteriekabel geführt werden. Der Dekkel 41 besitzt einseitig Nasen 42 die zusammen mit Schlitzen 43 in der Wandung des Batteriekastens eine Steckverbindung 44 erzeugen, die wie ein Scharnier funktioniert. An der gegenüberliegenden Wandung verhindert eine Schnappverbindung 45 das Aufklappen des Deckels.

## Patentansprüche

1. Vorrichtung zum Aufnehmen und Halten einer Batterie (10), bestehend aus einem Kasten (11) mit Befestigungsmitteln, wobei die Befestigungsmittel mit Teilen des Batteriefußes (12) zur Anlage kommen, sowie Teile des Kastenbodens (14) umgreifen, und wobei die Befestigungsmittel aus mindestens einem Zugbügel (17) und mindestens einer Druckgabel (18) sowie Mitteln zu deren Verbindung untereinander, insbesondere Schraubverbindungen (19), bestehen, **dadurch gekennzeichnet, dass** die Befestigungsmittel Teile den Batteriefußes (12) umgreifen, dass die Druckgabel (18) am unteren Ende wenigstens ein Gabelende (25) aufweist, welches die gleiche Form wie Aussparungen des Batteriefußes (12) aufweist und dass das Gabelende in den Aussparungen des Batteriefusses (12) zur Anlage kommt.

2. Vorrichtung nach Anspruch 1 **dadurch gekennzeichnet, daß** die Befestigungsmittel (17, 18) zwischen der Batterie (10) und mindestens einer Wandung (22) des Kastens (11) angebracht sind, wobei Zuglaschen (21) der Zugbügel (17) durch Aussparungen (26) im Kastenboden (14) geführt sind.

3. Vorrichtung nach Anspruch 2, **dadurch gekennzeichnet, daß** die Befestigungsmitter (17, 18) bis an den oberen Rand des Kastens (11) geführt sind, wobei für die Schraubverbindungen (19) Aufnahmen (46) in der Wandung (22) vorgesehen sind.

4. Vorrichtung nach einem der vorherigen Ansprüche, **dadurch gekennzeichnet, daß** mindestens eines der Bauteile Zugbügel (17) und Druckgabel (18) elastische Ausgleichsbereiche (31) aufweist.

5. Vorrichtung nach einem der vorherigen Ansprüche, **dadurch gekennzeichnet, daß** zumindest ein Teil des Kastenbodens (14) ein wellenförmiges Profil (15) aufweist.

6. Vorrichtung nach einem der vorherigen Ansprüche unter Einschluss von Anspruch 2, **dadurch gekennzeichnet, daß** die mindestens eine Wandung (22) Zentrierrippen (36) für die Batterie (10) aufweist, wobei zumindest ein Teil der Zentrierrippen (36) variabel in der Vorgabe des Abstandes zur Wandung (22) ausgeführt sein kann.

7. Vorrichtung nach einem der vorherigen Ansprüche, **dadurch gekennzeichnet, daß** der Kasten (11) Mittel zu dessen Montage, insbesondere Montagebohrungen (35) aufweist

8. Vorrichtung nach einem der vorherigen Ansprüche, **dadurch gekennzeichnet, daß** ein Deckel (41) mit integrierten Befestigungsmitteln, insbesondere einer Kombination aus Steckverbindungen (44) und Rastnasen (45), den Kasten (11) abschließt.

9. Vorrichtung nach einem der vorherigen Ansprüche, **dadurch gekennzeichnet, daß** der Kasten (11) sowie der eventuell vorgesehene Deckel (41) aus Kunststoff, insbesondere in Spritzgießtechnik hergestellt, und die Befestigungsmittel aus einem metallischen Werkstoff, insbesondere Stahl, hergestellt sind.

## Claims

1. Apparatus for accommodating and retaining a battery (10), comprising a box (11) with fastening means, the fastening means abutting against parts of the battery base (12) and also gripping around parts of the box base (14). and the fastening means comprising at least one tensile dip (17) and at least one bifurcated pressure foot (18) as well as means for interconnecting said clip and foot, more especially screw connections (19), **characterised in that** the fastening means grip around parts of the battery base (12), **in that** the pressure foot (18) has, at the lower end, at least one fork end (25) which has the same shape as recesses in the battery base (12), and **in that** the fork end comes to rest in the recesses in the battery base (12).

2. Apparatus according to claim 1, **characterised in that** the fastening means (17, 18) are situated between the battery (10) and at least one wall (22) of the box (11), tensile straps (21) of the tensile clips (17) being guided through recesses (26) in the box base (14).

3. Apparatus according to claim 2, **characterised in that** the fastening means (17, 18) are guided as far as the upper edge of the box (11), receiving means (46) being provided in the wall (22) for the screw connections (19).

4. Apparatus according to one of the previous claims, **characterised in that** at least one of the components, tensile dip (17) and pressure foot (18), has resilient compensation regions (31).

5. Apparatus according to one of the previous claims, **characterised in that** at least one part of the box base (14) has an undulatory profile (15).

6. Apparatus according to one of the previous claims, with the inclusion of claim 2, **characterised in that** the at least one wall (22) has centring ribs (36) for the battery (10), at least some of the centring ribs (36) being able to be configured in a variable manner in respect of the spacing from the wall (22)

7. Apparatus according to one of the previous claims, **characterised in that** the box (11) has means for the assembly thereof, more especially assembly bores (35).

8. Apparatus according to one of the previous claims, **characterised in that** a cover (41), with fastening means incorporated therein, more especially a combination of plug-in connections (44) and locking projections (45), terminates the box (11).

9. Apparatus according to one of the previous claims, **characterised in that** the box (11), as well as the cover (41) which is possibly provided, are produced from plastics material, more especially by an injection-moulding technique, and the fastening means are produced from a metallic material, more especially steel,

## Revendications

1. Dispositif permettant de loger et de maintenir une batterie (10), comprenant une caisse (11) par des moyens de fixation, ces moyens de fixation étant installés avec les pièces du pied de la batterie (12) tout en entourant les pièces du fond de la caisse (14), ces moyens de fixation étant composés d'au moins une bride de traction (17) et d'au moins un bras de compression (18) ainsi que d'autres moyens permettant de les relier l'un au-dessous de l'autre, notamment des liaisons par vis (19),
**caractérisé en ce que**
les moyens de fixation entourent les pièces du pied de la batterie (12), le bras de compression (18) présente, sur l'extrémité inférieure, au moins une extrémité de pied (25), de la même forme que les évidements du pied de la batterie (12) et l'extrémité de ce pied est installée dans les évidements du pied de la batterie (12).

2. Dispositif selon la revendication 1,
**caractérisé en ce que**
les moyens de fixation (17, 18) sont insérés entre la batterie (10) et au moins une paroi (22) de la caisse (11), les attaches de traction (21) de la bride de traction (17) étant dirigées dans le fond de la caisse (14) à l'aide des évidements (26).

3. Dispositif selon la revendication 2,
**caractérisé en ce que**
les moyens de fixation (17, 18) sont dirigés jusqu'à la périphérie supérieure de la caisse (11), des logements (46) étant placés dans la paroi (22) pour les liaisons par vis (19).

4. Dispositif selon l'une quelconque des revendications précédentes,
**caractérisé en ce qu'**
au moins l'un des composants de la bride de traction (17) et du bras de compression (18) présente des zones d'égalisation (31) élastiques.

5. Dispositif selon l'une quelconque des revendications précédentes,
**caractérisé en ce qu'**
au moins une pièce du fond de la caisse (14) présente un profil en forme d'onde (15).

6. Dispositif selon l'une quelconque des revendications précédentes, y compris la revendication 2,
**caractérisé en ce qu'**
au moins une paroi (22) présente des nervures de centrage (36) pour la batterie (10), au moins une pièce des nervures de centrage (36) pouvant être alors réalisée de manière variable dans la définition préalable de la distance par rapport à la paroi (22).

7. Dispositif selon l'une quelconque des revendications précédentes,
**caractérisé en ce que**
la caisse (11) présente un moyen permettant d'assurer son montage, notamment des alésages de montage (35).

8. Dispositif selon l'une quelconque des revendications précédentes,
**caractérisé en ce qu'**
un couvercle (41) équipé de moyens de fixation intégrés, notamment d'une combinaison de fiches de raccordement (44) et de taquets d'enclenchement (45), ferme la caisse (11).

9. Dispositif selon l'une quelconque des revendications précédentes,
**caractérisé en ce que**
la caisse (11) ainsi que le couvercle (41) éventuellement prévu sont construits en une matière plastique, en particulier selon une technique de moulage par injection, et les moyens de fixation sont construits en métal, notamment en acier.
